(19) Europäisches Patentamt / European Patent Office / Office européen des brevets

(11) **EP 4 585 036 A1**

(12) **EUROPEAN PATENT APPLICATION**
published in accordance with Art. 153(4) EPC

(43) Date of publication:
**16.07.2025 Bulletin 2025/29**

(21) Application number: **22958251.5**

(22) Date of filing: **07.12.2022**

(51) International Patent Classification (IPC):
***A01K 13/00*** (2006.01)  ***A46B 5/02*** (2006.01)

(52) Cooperative Patent Classification (CPC):
**A01K 13/00; A46B 5/02**

(86) International application number:
**PCT/KR2022/019853**

(87) International publication number:
**WO 2024/053797 (14.03.2024 Gazette 2024/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **05.09.2022 KR 20220112260**

(71) Applicant: **Park, Seong Jun**
**Chuncheon-si, Gangwon-do 24340 (KR)**

(72) Inventor: **Park, Seong Jun**
**Chuncheon-si, Gangwon-do 24340 (KR)**

(74) Representative: **RGTH**
**Patentanwälte PartGmbB**
**Neuer Wall 10**
**20354 Hamburg (DE)**

(54) **COMPANION ANIMAL COMB**

(57) The present disclosure relates to a comb for companion animal. The comb for companion animal according to one embodiment of the present disclosure includes a handle part, a body part connected to one end of the handle part, a head part disposed to be spaced apart from the body part and configured to be rotatable, and a connection part configured to connect the body part and the head part. The head part is configured to be rotatable relative to the body part via the connection part.

Fig. 2

100

**Description**

TECHNICAL FIELD

The present disclosure relates to a comb for companion animal, and more particularly, to a comb for companion animal, which is configured to move flexibly in conformity to a curvature of a body of a companion animal, and is capable of implementing a convenient and efficient combing.

BACKGROUND

In recent years, as the number of people who raise a companion animal increases, demands for products for hygiene and beauty of the companion animal are also increasing. For example, products such as a comb, a brush and the like for managing the hair of the companion animal are widely used.

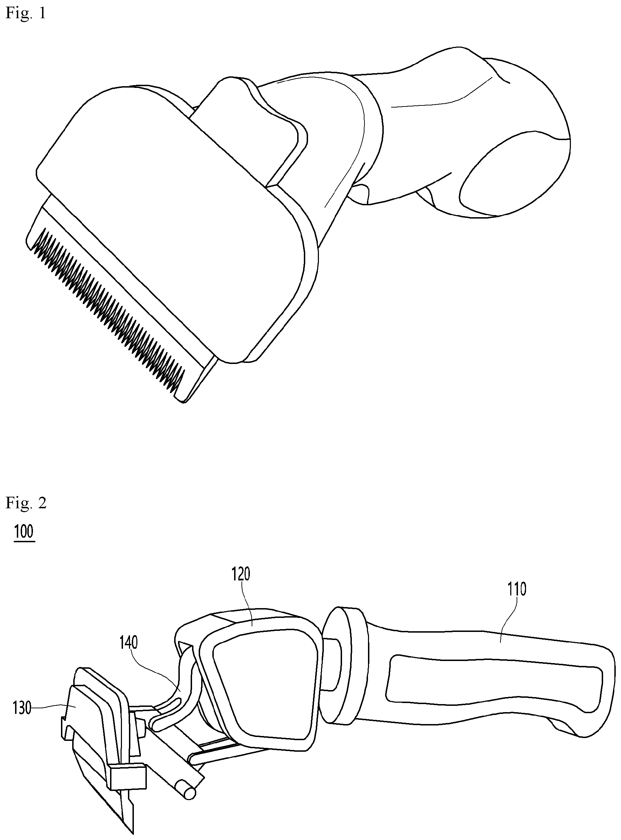

Fig. 1 shows a comb for companion animal that is widely used in the related art. As shown in Fig. 1, the comb for companion animal is constituted with a handle and a body part equipped with a comb. A user may comb the hair of the companion animal by moving his/her wrist while gripping the handle.

However, the comb for companion animal in the related art has a structure in which the teeth of the comb for brushing the hair of the companion animal is fixed to the body part. This makes it difficult to comb the hair of the companion animal in conformity to a curvature of the body of the companion animal. In addition, a pressure exerted by the user is directly transmitted to the companion animal so that stimulation may be applied to the skin of the companion animal. This may cause pain in the companion animal, and thus the companion animal may dislike being combed.

Therefore, there is a demand for the development of a comb for companion animal which is capable of efficiently combing a companion animal in conformity to a body thereof.

SUMMARY

One object of the present disclosure is to solve all the above-described problems. Another object of the present disclosure is to provide a comb for companion animal, which is configured to move flexibly in conformity to a curvature of a body of a companion animal.

Yet another object of the present disclosure is to provide a comb for companion animal configured such that a pressure is properly distributed according to an operation of the user to comb the companion animal in an efficient manner.

Representative configurations of the present disclosure to achieve the above objects are described below.

According to one aspect of the present disclosure, there is provided a comb for companion animal including a handle part, a body part connected to one end of the handle part, a head part disposed to be spaced apart from the body part and configured to be rotatable, and a connection part configured to connect the body part and the head part. The head part is configured to be rotatable relative to the body part via the connection part.

According to one aspect of the present disclosure, the connection part may include a first connector and a second connector. A first end portion of the first connector may be connected to the body part via a first body shaft, a second end portion of the first connector may be connected to the head part via a first head shaft, a first end portion of the second connector may be connected to the body part via a second body shaft, and a second end portion of the second connector may be connected to the head part via a second head shaft. The first connector may be configured to be rotatable about the first body shaft and the second connector may be configured to be rotatable about the second body shaft.

According to one aspect of the present disclosure, a distance between the first body shaft and the second body shaft may be different from a distance between the first head shaft and the second head shaft.

According to one aspect of the present disclosure, the distance between the first body shaft and the second body shaft may be longer than the distance between the first head shaft and the second head shaft.

According to one aspect of the present disclosure, the head part may be configured to be rotatable according to a difference in forces generated when rotating the first connector and the second connector.

According to one aspect of the present disclosure, a brush may be provided on one side of the head part.

According to the present disclosure, a head part is connected to a body part via a connection part such that the head part is rotatable relative to the body part. Accordingly, the head part may actively move in conformity to a curvature of a body of a companion animal, thereby combing the companion animal efficiently.

Further, according to the present disclosure, a pressure to be applied to the head part may be appropriately distributed according to an operation made by a user, which facilitates the combing and reduces stimulation to the companion animal when combing.

BRIEF DESCRIPTION OF THE DRAWINGS

Fig. 1 shows a comb for companion animal that is widely used in the related art.

Fig. 2 is a perspective view of a comb for companion animal according to one embodiment of the present disclosure.

Fig. 3 is a front view of the comb for companion animal according to one embodiment of the present disclosure.

Fig. 4 is a detailed view illustrating an internal structure of the comb for companion animal according to one embodiment of the present disclosure.

Figs. 5A to 5C show states of the comb for companion animal according to one embodiment of the present disclosure, in which a head part rotates relative to a body part.

Figs. 6A and 6B show a motion of the comb for companion animal according to one embodiment of the present disclosure.

Figs. 7A and 7B illustratively show how to comb using the comb for companion animal according to one embodiment of the present disclosure and a comb for companion animal according to a comparative embodiment, respectively.

DETAILED DESCRIPTION

Embodiments of the present disclosure are exemplified for the purpose of describing the technical spirit of the present disclosure. The scope of the claims according to the present disclosure is not limited to the embodiments described below or to the detailed descriptions of these example embodiments.

Unless otherwise defined, all technical and scientific terms used herein have the same meaning commonly understood by those skilled in the art to which the present disclosure pertains. All terms used herein are selected for the purpose of more clearly describing the present disclosure and not limiting the scope of the present disclosure defined by appended claims.

Unless the phrase or sentence clearly indicates otherwise, terms "comprising" "including" "having" and the like used herein should be construed as open-ended terms encompassing the possibility of including other embodiments. Throughout the present specification, when a constituent element is referred to as being "positioned" at, "connected" to, or "coupled" to one side of another constituent element, the constituent element may be in direct contact with or directly connected or connected to the one side of another constituent element, or may be positioned at, connected or connected to another constituent element by intervening yet another constituent element therebetween.

Hereinafter, exemplary embodiments of the present disclosure will be described in detail with reference to the accompanying drawings at such an extent that they may be readily practiced by those ordinary skilled in the art. In the accompanying drawings, the same reference numerals are assigned to the same or corresponding components. Further, in the following descriptions of the exemplary embodiments, duplicate descriptions of the same or corresponding constituent elements may be omitted. However, even though a description of a constituent element is omitted, such a constituent element is not intended to be excluded in any exemplary embodiment.

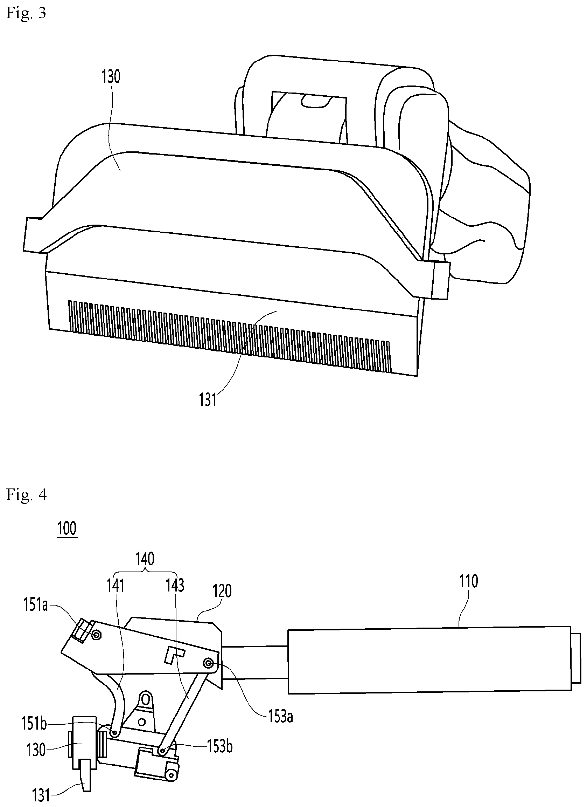

Fig. 2 is a perspective view of a comb for companion animal according to one embodiment of the present disclosure, Fig. 3 is a front view of the comb for companion animal according to one embodiment of the present disclosure, and Fig. 4 is a detailed view illustrating an internal structure of the comb for companion animal according to one embodiment of the present disclosure.

Referring to Figs. 2 to 4, a comb for companion animal 100 according to one embodiment of the disclosure may include a handle part 110, a body part 120, a head part 130, and a connection part 140.

The handle part 110 of the comb for companion animal 100 according to one embodiment of the present disclosure corresponds to a part a user grips to use the comb for companion animal 100. The handle part 110 may have a size and shape that the user may operate the comb for companion animal 100 while holding the comb for companion animal 100 with his/her one hand. The handle part 110 may be formed to have a curvature so that a pressure applied to the user's hand when gripping the handle part 110 may not cause pain or discomfort in the user's hand.

The body part 120 of the comb for companion animal 100 according to one embodiment of the present disclosure may be connected to one end of the handle part 110 to stably support the head part 130, which will be described later. In one embodiment, the head part 130 may be formed in a structure that is connected to the connection part 140 while receiving one end of the connection part 140 therein.

The head part 130 of the comb for companion animal 100 according to one embodiment of the present disclosure may be configured to rotate while being spaced apart from the body part 120. In one embodiment, the head part 130 may be connected to the body part 120 via the connection part 140 described below.

According to one embodiment of the present disclosure, a brush 131 may be provided on one side of the head part 130.

Referring to Fig. 3, the brush 131 may be formed to be oriented downward on one side of the head part 130. In one embodiment, the brush 131 may function to comb and groom the hair of the companion animal or scrap the body of the companion animal, and may be formed of various known materials in various shapes depending on a target or a usage.

The connection part 140 of the comb for companion animal 100 according to one embodiment of the present disclosure may perform a function of connecting the body part 120 and the head part 130. In one embodiment, the head part 130 may be configured to rotate relative to the body part 120 by the connection part 140.

Referring to Fig. 4, the connection part 140 may include a first connector 141 and a second connector 143.

According to one embodiment of the present disclosure, each of the first connector 141 and the second connector 143 may be configured such that one end thereof is connected to the body part 120 and the other end thereof is connected to the head part 130. Specifically, one end of the first connector 141 may be connected to the body part 120 via a first body shaft 151a, and the other end thereof may be connected to the head part 130 via a first head shaft 151b. One end of the second connector 143 may be connected to the body part 120 via a second body shaft 153a, and the other end thereof may be connected to the head part 130 via a second head shaft 153b.

According to one embodiment of the disclosure, the first connector 141 may be configured to rotate about the first body shaft 151a and the second connector 143 may be configured to rotate about the second body shaft 153a.

According to one embodiment of the present disclosure, a distance between the first body shaft 151a and the second body shaft 153a may be set to be different from a distance between the first head shaft 151b and the second head shaft 153b. In one embodiment, the distance between the first body shaft 151a and the second body shaft 153a may be set to be longer than the distance between the first head shaft 151b and the second head shaft 153b.

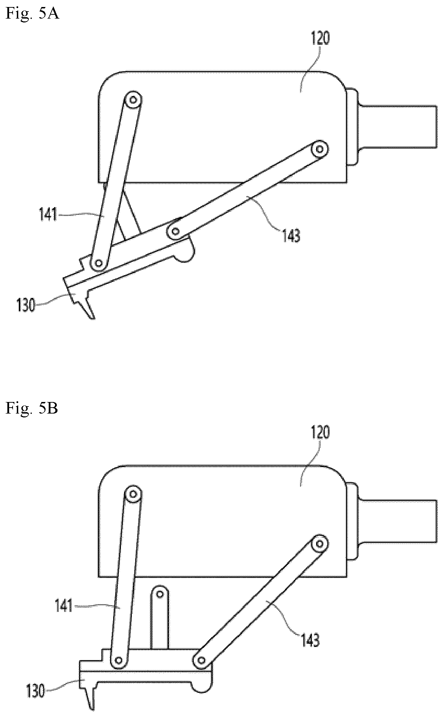

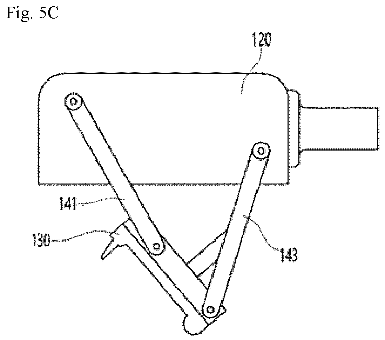

Figs. 5A to 5C show states of the comb for companion animal according to one embodiment of the present disclosure, in which the head part rotates relative to the body part, respectively. As shown in Figs. 5A to 5C, the head part 130 of the comb for companion animal 100 according to one embodiment of the present disclosure may be configured to rotate relative to the body part 120 in accordance with an operation of the connection part 140 (that is, the first connector 141 and the second connector 143).

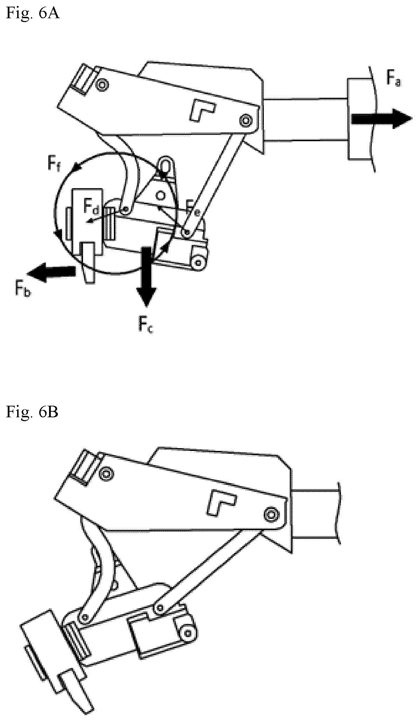

Figs. 6A and 6B show a motion of the comb for companion animal according to one embodiment of the present disclosure. Hereinafter, an operating principle of the comb for companion animal 100 according to one embodiment of the present disclosure will be described in detail with reference to Figs. 6A and 6B.

As shown in Fig. 6A, when a predetermined pressure $F_e$ is applied in a direction toward the body of the companion animal while the head part 130 is brought into contact with the body of the companion animal, a frictional force is generated on one side of the head part 130 (that is, in the brush 131). In a state in which the frictional force is generated in the brush 131, when the user pulls the hand portion 110 in a horizontal direction with a predetermined power $F_a$, a repulsive force $F_b$ acts on the head part 130 in a direction opposite to the horizontally-pulling direction.

The first connector 141 rotates about the first body shaft 151a due to the repulsive force $F_b$ acting on the head part 130. With such a rotational motion of the first connector 141, a force $F_d$ acts on the first head shaft 151b in a direction shown in Fig. 6A. Similarly, the second connector 143 rotates about the second body shaft 153a due to the repulsive force $F_b$ acting on the head part 130. With such a rotational motion of the second connector 143, a force $F_e$ acts on the second head shaft 153b in a direction shown in Fig. 6A. At this time, due to a difference between the distance between the first body shaft 151a and the second body shaft 153a and the distance between the first head shaft 151b and the second head shaft 153b, the force $F_d$ acting on the first head shaft 151b and the force $F_e$ acting on the second head shaft 153b are staggered in different directions. As a result, a rotational force $F_f$ acts on the head part 130 about the first head shaft 151b.

The rotational force $F_f$ causes the head part 130 to rotate in a predetermined range (see Fig. 6B).

As the head part 130 rotates, a magnitude of a force acting on a portion of the head part 130, which is brought into contact with the body of the companion animal, may vary. Specifically, the magnitude of the force acting on one side (that is, the brush) of the head part 130 and a magnitude of a force acting on a side opposite to the one side may be represented by Formulas below.

$$\text{Force acting on one side of head part} = \text{Force } F_c/2 + \text{Rotational force } F_f$$

$$\text{Force acting on opposite side of head part} = \text{Force } F_c/2 - \text{Rotational force } F_f$$

With this configuration, a significantly high level of pressure may act on the brush 131 of the head part 130 with the motion of the head part 130, thereby implementing an efficient combing.

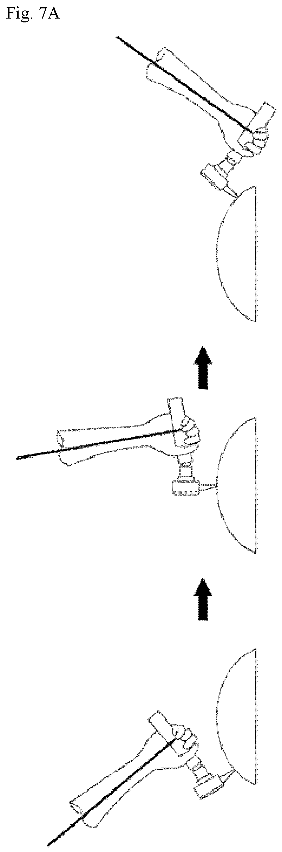

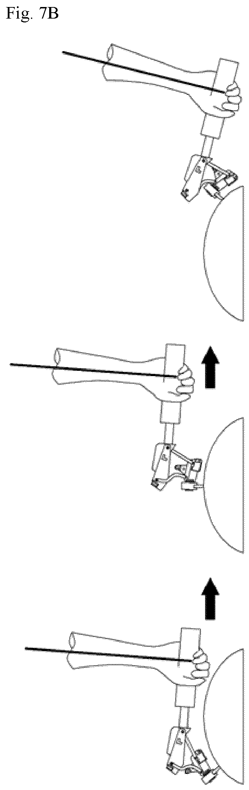

Figs. 7A and 7B illustratively show how to comb using the comb for companion animal according to one embodiment of the present disclosure and a comb for companion animal according to comparative embodiment, respectively.

When combing the companion animal with the comb for companion animal, in order to apply a constant pressure with respect to the companion animal as a target, an angle of the head part with respect to a contact portion where the comb is brought into contact with the companion animal needs to be kept constant.

According to comparative embodiment (the prior art) shown in Fig. 7A, in order to constantly keep the angle of the head part with respect to the contact portion, the angle of the head part needs to be changed in conformity to a curvature of the contact portion (that is, the body of the companion animal). This may cause inconvenience to the user because he/she has to continuously change an angle of his/her wrist at the time of combing.

In contrast, according to one embodiment of the present disclosure, as shown in Fig. 7B, the user may flexibly operate the heat part in conformity to the curvature of the body of the companion animal by merely adjusting his/her power without moving his/her wrist in conformity to the curvature.

As described above, the comb for companion animal according to one embodiment of the present disclosure is configured such that the head part rotates relative to the body part via the connection part that connects the head part and the body part. With this configuration, the user may easily brush the companion animal. Further, the comb for companion animal according to the present disclosure may be easily applied to various companion animals of various body types.

Although the present disclosure has been described above in terms of specific items such as detailed constituent elements as well as the limited exemplary embodiments and the drawings, they are merely provided to help more general understanding of the present disclosure, and the present disclosure is not limited to the above exemplary embodiments. Various modifications and changes could have been realized by those skilled in the art to which the present disclosure pertains from the above description.

Therefore, the spirit of the present disclosure need not to be limited to the above-described exemplary embodiments, and in addition to the appended claims to be described below, and all ranges equivalent to or changed from these claims need to be the to belong to the scope and spirit of the present disclosure.

**Claims**

1. A comb for companion animal, comprising:

   a handle part;
   a body part connected to one end of the handle part;
   a head part disposed to be spaced apart from the body part and configured to be rotatable; and
   a connection part configured to connect the body part and the head part,
   wherein the head part is configured to be rotatable relative to the body part via the connection part.

2. The comb for companion animal of Claim 1, wherein the connection part includes a first connector and a second connector,

   wherein a first end portion of the first connector is connected to the body part via a first body shaft, a second end portion of the first connector is connected to the head part via a first head shaft, a first end portion of the second connector is connected to the body part via a second body shaft, and a second end portion of the second connector is connected to the head part via a second head shaft, and
   wherein the first connector is configured to be rotatable about the first body shaft and the second connector is configured to be rotatable about the second body shaft.

3. The comb for companion animal of Claim 2, wherein a distance between the first body shaft and the second body shaft is different from a distance between the first head shaft and the second head shaft.

4. The comb for companion animal of Claim 3, wherein the distance between the first body shaft and the second body shaft is longer than the distance between the first head shaft and the second head shaft.

5. The comb for companion animal of Claim 2, wherein the head part is configured to be rotatable according to a difference in forces generated when rotating the first connector and the second connector.

6. The comb for companion animal of Claim 1, wherein a brush is provided on one side of the head part.

Fig. 1

Fig. 2

100

Fig. 3

Fig. 4

Fig. 5A

Fig. 5B

Fig. 5C

Fig. 6A

Fig. 6B

Fig. 7A

Fig. 7B

## INTERNATIONAL SEARCH REPORT

| International application No. |
| --- |
| **PCT/KR2022/019853** |

| A. | CLASSIFICATION OF SUBJECT MATTER |
| --- | --- |
| | **A01K 13/00**(2006.01)i; **A46B 5/02**(2006.01)i |

According to International Patent Classification (IPC) or to both national classification and IPC

| B. | FIELDS SEARCHED |
| --- | --- |

Minimum documentation searched (classification system followed by classification symbols)

A01K 13/00(2006.01); A46B 15/00(2006.01); B26B 19/06(2006.01); B26B 19/38(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 반려동물(pet), 빗(comb), 브러쉬(brush), 링크(link), 관절(joint), 회전(rotate)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 204968893 U (SUZHOU SHENGKANG PLASTIC ELECTRIC CO., LTD.) 20 January 2016 (2016-01-20)<br>See paragraphs [0023]-[0027] and figures 1-5. | 1,6 |
| Y | | 2-5 |
| Y | JP 2016-537121 A (KONINKLIJKE PHILIPS N.V.) 01 December 2016 (2016-12-01)<br>See paragraph [0087] and figures 12-13. | 2-5 |
| A | JP 2011-526168 A (BRAUN GMBH) 06 October 2011 (2011-10-06)<br>See paragraph [0043] and figure 4. | 1-6 |
| A | KR 10-2009-0011956 A (SAE HAN TECH CO., LTD.) 02 February 2009 (2009-02-02)<br>See paragraphs [0032]-[0033] and figures 5-6. | 1-6 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 May 2023** | **25 May 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
|---|
| **PCT/KR2022/019853** |

### C.    DOCUMENTS CONSIDERED TO BE RELEVANT

| Category* | Citation of document, with indication, where appropriate, of the relevant passages | Relevant to claim No. |
|---|---|---|
| A | KR 10-2005-0093244 A (DAEWOO ELECTRONICS CORPORATION) 23 September 2005 (2005-09-23)<br>      See paragraph [0023] and figures 1-3. | 1-6 |

Form PCT/ISA/210 (second sheet) (July 2022)

## INTERNATIONAL SEARCH REPORT
### Information on patent family members

International application No.

**PCT/KR2022/019853**

| Patent document cited in search report | | | Publication date (day/month/year) | Patent family member(s) | | | Publication date (day/month/year) |
|---|---|---|---|---|---|---|---|
| CN | 204968893 | U | 20 January 2016 | None | | | |
| JP | 2016-537121 | A | 01 December 2016 | CN | 104647415 | A | 27 May 2015 |
| | | | | CN | 104647415 | B | 21 December 2018 |
| | | | | CN | 204913964 | U | 30 December 2015 |
| | | | | EP | 2875916 | A1 | 27 May 2015 |
| | | | | EP | 2875916 | B1 | 09 January 2019 |
| | | | | EP | 2875916 | B2 | 29 September 2021 |
| | | | | EP | 3071375 | A1 | 28 September 2016 |
| | | | | EP | 3071375 | B1 | 22 July 2020 |
| | | | | ES | 2817845 | T3 | 08 April 2021 |
| | | | | JP | 6321804 | B2 | 09 May 2018 |
| | | | | US | 2016-0271815 | A1 | 22 September 2016 |
| | | | | US | 9987759 | B2 | 05 June 2018 |
| | | | | WO | 2015-075160 | A1 | 28 May 2015 |
| JP | 2011-526168 | A | 06 October 2011 | CN | 102076469 | A | 25 May 2011 |
| | | | | CN | 104942841 | A | 30 September 2015 |
| | | | | CN | 104942841 | B | 24 April 2020 |
| | | | | DE | 102008031132 | A1 | 07 January 2010 |
| | | | | EP | 2315649 | A2 | 04 May 2011 |
| | | | | EP | 2315649 | B1 | 07 February 2018 |
| | | | | JP | 5356519 | B2 | 04 December 2013 |
| | | | | RU | 2010154021 | A | 10 August 2012 |
| | | | | RU | 2487009 | C2 | 10 July 2013 |
| | | | | US | 2011-0094107 | A1 | 28 April 2011 |
| | | | | WO | 2010-000352 | A2 | 07 January 2010 |
| | | | | WO | 2010-000352 | A3 | 20 May 2010 |
| KR | 10-2009-0011956 | A | 02 February 2009 | None | | | |
| KR | 10-2005-0093244 | A | 23 September 2005 | None | | | |

Form PCT/ISA/210 (patent family annex) (July 2022)